# EUROPEAN PATENT SPECIFICATION

(11) **EP 4 375 657 B1**
(45) Date of publication and mention of the grant of the patent: **10.12.2025**
(21) Application number: 22209811.3
(22) Date of filing: 28.11.2022
(51) Int. Cl.: G01N 29/04, G01N 29/44

(54) **METHOD AND SYSTEM FOR DETECTING ANOMALIES OF MECHANICAL COMPONENTS, IN PARTICULAR AIRCRAFT COMPONENTS, BY CLASSIFYING SPECTROGRAMS OF ACOUSTIC SIGNALS**
VERFAHREN UND SYSTEM ZUR ERKENNUNG VON ANOMALIEN VON MECHANISCHEN KOMPONENTEN, INSBESONDERE FLUGZEUGKOMPONENTEN, DURCH KLASSIFIZIERUNG VON SPEKTROGRAMMEN VON AKUSTISCHEN SIGNALEN
PROCÉDÉ ET SYSTÈME DE DÉTECTION D'ANOMALIES DE COMPOSANTS MÉCANIQUES, NOTAMMENT DE COMPOSANTS D'AÉRONEF, PAR CLASSIFICATION DE SPECTROGRAMMES DE SIGNAUX ACOUSTIQUES

(43) Date of publication of application: 29.05.2024
(73) Proprietor: Leonardo S.p.a., 00195 Roma (IT)
(72) Inventor: CALABRÒ, Francesco, 21017 Samarate (VA) (IT); COLANGELO, Federico, 21017 Samarate (VA) (IT); SANGUINI, Roberto, 21017 Samarate (VA) (IT)
(74) Representative: Studio Torta S.p.A.

(56) References cited:
- US-A1- 2008 144 927
- FUJII HIROMITSU ET AL: "Defect detection with estimation of material condition using ensemble learning for hammering test", 2016 IEEE INTERNATIONAL CONFERENCE ON ROBOTICS AND AUTOMATION (ICRA), IEEE, 16 May 2016 (2016-05-16), pages 3847 - 3854, XP032908643, [retrieved on 20160608], DOI: 10.1109/ICRA.2016.7487573

## Description

### Technical field

The present invention relates to a method and to a system for detecting anomalies of mechanical components, in particular aircraft components, by classifying spectrograms of acoustic signals.

### Background

As is known, in the aeronautical field the need is particularly felt to detect the presence of anomalies (understood as damage or defects) of aircraft mechanical components, in order to ensure the safety of flights. To such end, for example, the so-called non-destructive controls are known, which allow evaluating the general conditions of the components of an aircraft in a relatively short time.

For example, some non-destructive controls provide for the research of possible anomalies of the components of an aircraft to be carried out by highly specialized personnel that carries out a visual and/or acoustic inspection of the components.

In particular, in the case of acoustic inspection, the component under examination is repeatedly hit with a mechanical striking tool (for example, a hammer made of aluminium), so as to generate an acoustic response to the striking. On the basis of such acoustic response, as perceived by ear, the person in charge of the inspection can detect, on the basis of his/her experience, the possible presence of an anomaly of the component (for example, a portion of fuselage or a blade of a helicopter), such as for example the presence of an unbonded area or a delamination.

Therefore, the acoustic inspection, also known as tapping test, requires the presence of trained personnel, provided with a corresponding technical preparation and with a remarkable practical experience. Furthermore, such procedure cannot be automated and is inevitably subject to uncertainties connected to the ability of the personnel carrying it out and to human error. To such regard, for example, it is possible for human factors (tiredness, distraction, etc.) or environmental conditions (for example, the presence of background noises) to negatively influence the capability of the personnel in charge of the inspection to detect anomalies.

The document "Defect detection with estimation of material condition using ensemble learning for hammering test", of H. Fujii et al., 2016 IEEE International Conference on Robotics and Automation (IRCA), Stockholm, May 16-21, 2016, pages 3847-3854 discloses a method for detecting material defects, such a method including implementing a plurality of detectors of the weak learner type, each detector dealing with a corresponding frequency subband and analysing a hammering sound.

US 2008/0144927 A1 refers to a non-destructive inspection apparatus, which includes a sensor unit for detecting vibrations transmitted through a test object and a signal input unit for extracting a target signal from an electric signal outputted by the sensor unit; furthermore, the apparatus includes a single neural network, which is configured to classify a set of characteristics, which includes multiple frequency components extracted from the target signal.

### Summary

The object of the present invention is thus to provide a solution that overcomes at least in part the drawbacks of the prior art.

According to the present invention a method and a system for detecting anomalies are provided, as defined in the appended claims.

### Brief description of the figures

In order to better understand the present invention, embodiments thereof will now be described, by way of mere non-limiting example, with reference to the accompanying drawings, wherein:
- Figure 1 shows a front view of a part of a component of an aircraft;
- Figure 2 shows a block diagram of a system for detecting anomalies;
- Figure 3 shows block diagrams of convolutional neural networks;
- Figures 4, 9 and 11 show flow diagrams of training operations according to the present method;
- Figure 5 shows an enlarged front view of a portion of the part of component shown in Figure 1;
- Figure 6 shows a representation of a spectrogram;
- Figure 7 shows a flow diagram of operations for generating spectrograms;
- Figure 8 shows a scheme of the structure of a spectrogram;
- Figure 10 shows a scheme of a confusion matrix; and
- Figure 12 shows a flow diagram of operations according to the present method.

### Description of embodiments

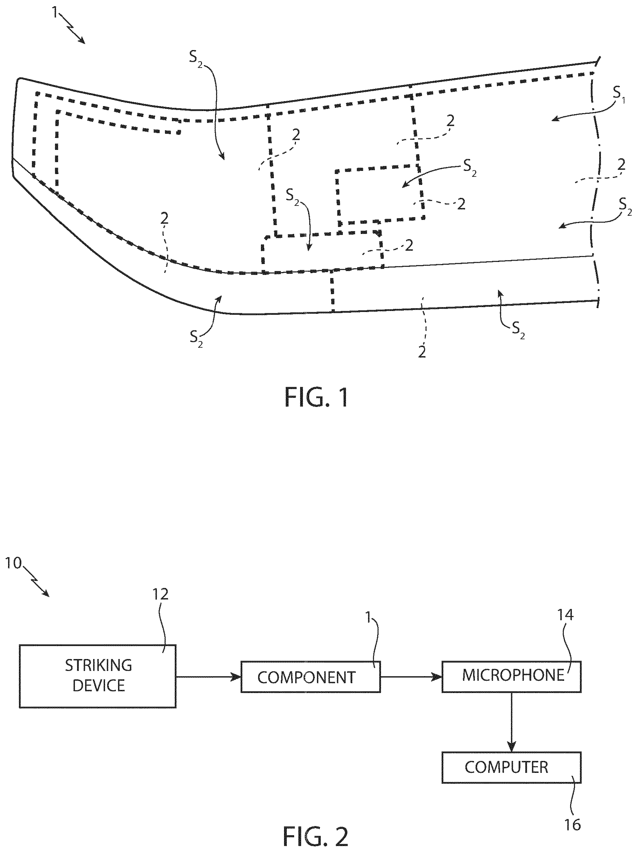

The present method for detecting anomalies of a component of an aircraft is described, by way of example, with reference to the component 1 shown in Figure 1 and to the detection system 10 shown in Figure 2, which is shown as operating, for example, on the component 1; as is specifically explained in the following, the detection system 10 comprises a striking device 12, a microphone 14 and a computer 16.

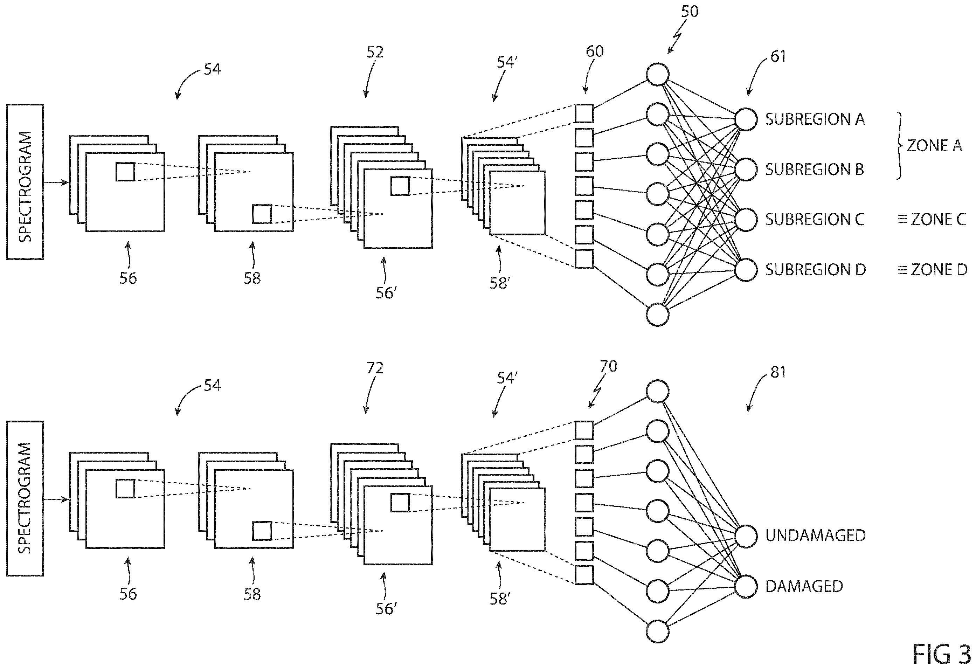

That having been said, the present method for detecting anomalies provides for having a multiclass classifier 50 (shown in Figure 3), which in the following is referred to as the zone classifier 50, and a plurality of classifiers 70 (one shown in Figure 3), which in the following are referred to as the binary classifiers 70, since they are configured to classify on two classes, as is explained in the following.

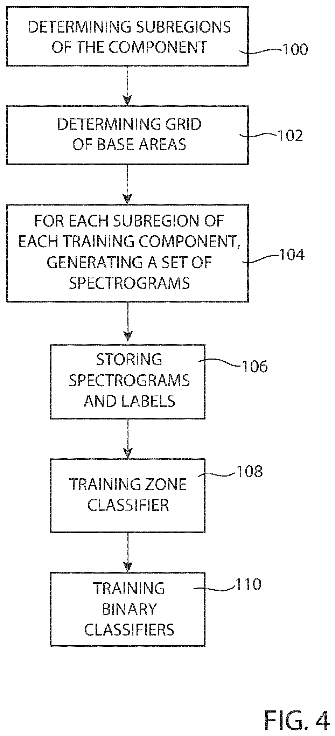

The zone classifier 50 and the binary classifiers 70 may be trained in the manner described with reference to Figure 4.

Specifically, the training of the zone classifier 50 provides for having a plurality of components identical to the component 1, without deteriorations, and which in the following are referred to as the training components. Furthermore, as is shown in Figure 4, the training provides for determining (block 100, Figure 4) a plurality of portions 2 (visible in Figure 1) of the component 1, which in the following are referred to as the subregions 2.

Practically, the component 1 is divided into the subregions 2, each one of which has a respective outer surface S₂, which in the following is referred to as the subregion surface S₂. Without any loss of generality, the subregions 2 are adjacent to one another and not overlapped, so that, referring to the outer surface S₁ for indicating the overall outer surface of the component 1, each point of the outer surface S₁ belongs to a corresponding subregion surface S₂.

More specifically, the division of the component 1 into the respective subregions 2 may occur, for example, on the basis of the inner structure of the component 1, for example so that, considering any subregion 2 and referring to the cross-sections thereof for indicating the cross-sections of the subregion 2 taken along planes perpendicular to a same direction of reference, such cross-sections are identical to one another. Still by way of mere example, in the case when the component 1 is formed by different lattice structures (not shown) covered by a metal surface, one or more subregions 2 may be delimited so that each one covers a corresponding lattice structure. Still by way of example, it is possible for one or more subregions 2 to be delimited depending on the shape of the component 1, for example so that the edges of the subregion 2 coincide with regions where a thickness variation of the component 1 or a camber variation of the outer surface S₁ of the component 1 occurs. Generally, however, the criteria adopted for determining the boundaries of the subregions 2 of the component 1 can be different with respect to what described and are irrelevant for the implementation of the present method. Furthermore, since the training components are identical to the component 1, the division into the subregions 2 is also applied to each training component.

The subregions 2 are stored in the computer 16 and are for example in a number equal to NUM_SUBREG.

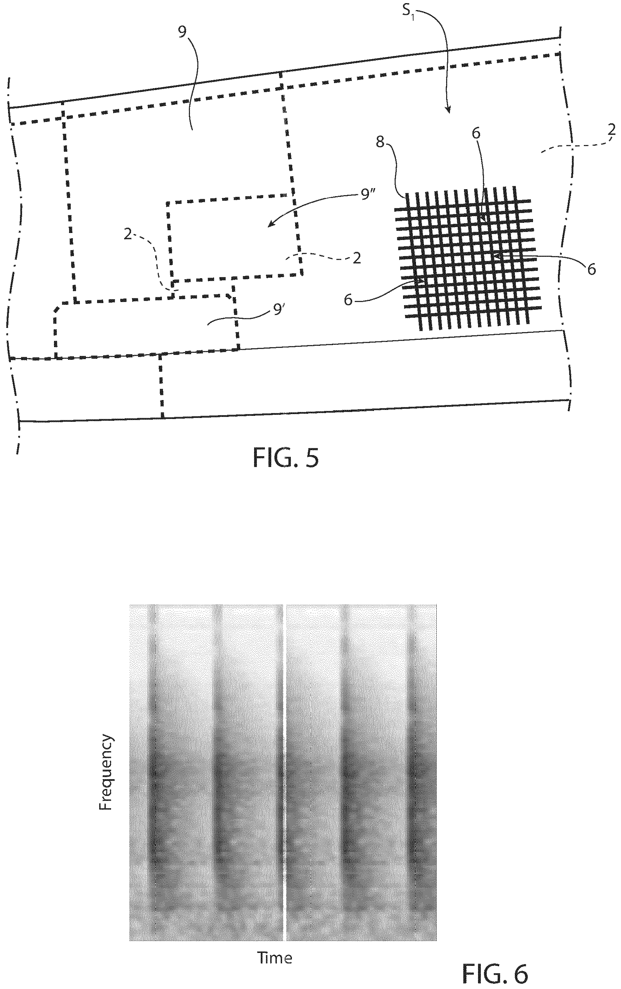

Subsequently, the outer surface S₁ is divided into a set of respective subportions 6, which in the following are referred to as the base areas 6. In particular, a grid 8 formed by the base areas 6 (a portion of grid is qualitatively shown in Figure 5) is determined (block 102, Figure 4); by way of mere example, each base area 6 may have an extension equal to approximately 1cm².

More specifically, even if in Figure 5 the grid 8 of base areas 6 extends only on part of the outer surface S₁ of the component 1, the grid 8 of base areas 6 fully covers the outer surface S₁. Furthermore, even if in Figure 5 the base areas 6 are shown as having an approximately square shape and are arranged so as to form a matrix, they may have a different shape, besides shapes different from one another; also the arrangement of the base areas 6 may be different. In first approximation, and for the purposes of the present method, the base areas 6 are comparable to punctiform areas and can be struck individually.

Since the training components are identical to the component 1, the grid 8 of base areas 6 also applies to the outer surface of each training component.

That having been said, for each one of the above-mentioned training components, a corresponding plurality of spectrograms (an example is shown in Figure 6) is generated (block 104, Figure 4) for each one of the subregions 2, as is described in the following.

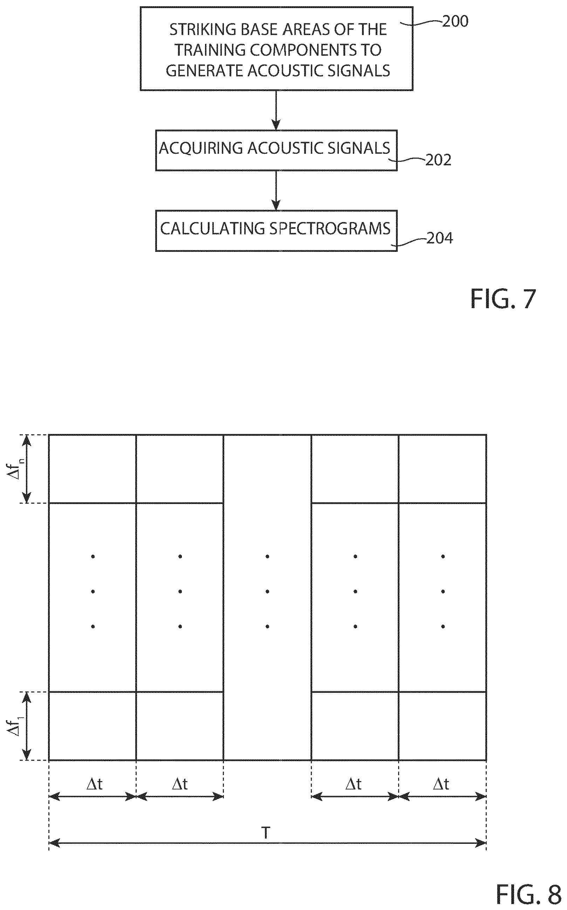

Specifically, for each training component, and for each subregion 2 of the training component, for each base area 6 that belongs to the subregion 2 the operations shown in Figure 7 are performed.

In particular, the base area 6 is struck (block 200, Figure 7) by the striking device 12, so as to generate a corresponding acoustic signal, which is acquired (block 202, Figure 7) by means of the microphone 14.

More specifically, the acoustic signal extends on a corresponding time interval having a duration T (for example equal to two seconds), identical for all the acoustic signals; furthermore, the base area 6 is struck for example periodically, with a frequency equal to 3Hz. Optionally, the acoustic signals may be acquired in a synchronous manner by striking the respective base areas 6, so that, during each time interval of an acoustic signal, a same number of strikes of the base area 6 takes place; optionally, the time arrangement of the strikes may be the same for all the acoustic signals. In other words, the acoustic signal is acquired during the periodic striking of the base area 6.

By way of example, the acquisition of each acoustic signal provides for the sampling (for example, with a precision of sixteen bits per sample) of the acoustic signal with a sampling frequency for example equal to 44kHz. Consequently, in a manner known per se the acquisition of each acoustic signal entails the transduction of the acoustic signal in a corresponding electric signal and the sampling of the electric signal, therefore it entails the generation of a sampled electric signal, whose samples represent corresponding samples of the acoustic signal.

Subsequently, in a manner known per se, the computer 16 calculates (block 204, Figure 7), for each acquired acoustic signal, the corresponding spectrogram, on the basis of the corresponding sampled electric signal.

As is qualitatively shown in Figure 8, each spectrogram is formed by a value matrix; each row of the spectrogram refers to a corresponding spectral interval (two indicated by Δf₁ and Δfₙ respectively), whereas each column refers to a corresponding time sub-interval of the time interval on which the acoustic signal extends. The time sub-intervals of the time interval on which the acoustic signal extends may have a same duration Δt, for example equal to 40ms; the spectral intervals may be non-uniform, therefore they may be generated on the basis for example of a logarithmic curve, instead of a linear curve.

Given a column of the spectrogram, each value of the column is indicative of the energy content of the portion of acoustic signal relative to the corresponding time sub-interval that falls within the corresponding spectral interval. For example, the values of each column of the spectrogram are equal to the modulus of the samples of the discrete Fourier transform of the samples of the sampled electric signal that fall within the corresponding time sub-interval; it is further possible, in each column of the spectrogram, for each element of the column to be obtained as the result of a numeric filtering of several (for example, three) adjacent samples of the above-mentioned discrete Fourier transform.

By way of example, the spectrograms may be the so-called MEL spectrograms.

Still with reference to Figure 4, the computer 16 stores (block 106, Figure 4) the spectrograms and the association present between each spectrogram and the corresponding subregion 2, i.e. the subregion 2 to which the base area 6, which has been struck during the acquisition of the acoustic signal to which the spectrogram refers, belongs. Practically, the computer 16 stores, for each spectrogram, a corresponding label, which represents a corresponding class which indicates the subregion 2 to which the spectrogram refers.

Then, the computer 16 trains (block 108, Figure 4) the zone classifier 50, on the basis of the spectrograms and of the relative labels, in a supervised manner. As is explained more specifically in the following, the zone classifier 50 is a multiclass classifier; for example, the zone classifier 50 is a convolutional neural network, as is shown in Figure 3.

Specifically, the zone classifier 50 comprises a feature extraction stage 52, which includes a sequence of one or more hidden layers; in particular, by way of mere example, Figure 3 shows a first hidden layer and a second hidden layer, indicated by 54 and 54' respectively. Furthermore, both the first and the second hidden layers 54, 54' comprise a respective convolution stage (indicated by 56 and 56' respectively) and a subsequent respective pooling stage (indicated by 58 and 58' respectively).

The convolution stages 56, 56' are configured to perform, starting from the data present on the respective inputs, convolution, activation and (optionally) normalization operations, on the basis of respective filters, in a manner known per se. In particular, the convolution stage 56 of the first hidden layer 54 receives at the input single spectrograms, whereas the convolution stage 56' of the second hidden layer 54' receives at the input the output of the pooling stage 58 of the first hidden layer 54. To such regard, the pooling stages 58, 58' are configured to perform pooling operations on the outputs of the corresponding convolution stages 56, 56'.

The feature extraction stage 52 further comprises a flatten layer 60, which is configured to perform flattening operations on the output of the pooling stage 58' of the second hidden layer 54'.

The zone classifier 50 further comprises a fully connected layer 61, shown in a simplified and qualitative manner, which receives the output of the flatten layer 60 and classifies it on a number of classes equal to the number NUM_SUBREG of subregions 2; each class is thus associated with a corresponding subregion 2. For simplicity of display, in Figure 3 a number NUM_SUBREG of subregions 2 equal to four was assumed; the four subregions 2 are indicated by SUBREGION A, SUBREGION B, SUBREGION C, SUBREGION D.

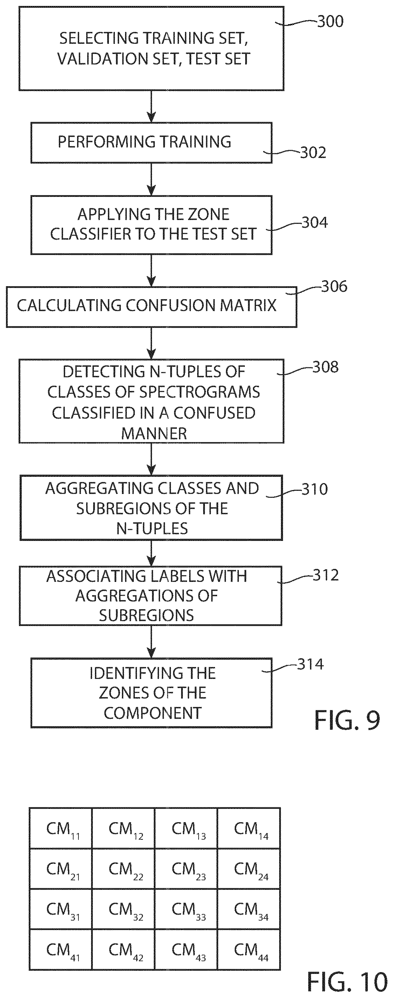

Specifically, the training of the zone classifier 50 may occur as is shown in Figure 9.

In particular, starting from the spectrograms relative to the training components stored in the computer 16, the computer 16 selects (block 300, Figure 9) a first subset, a second subset and a third subset, which may be disjoined from one another, i.e. may not share any spectrogram. In the following, reference is made to the first, to the second and to the third subsets of spectrograms as the training set, the validation set and the test set respectively.

Subsequently, on the basis of the training set and of the relative labels, the computer 16 performs (block 302, Figure 9) a training of the zone classifier 50. Such training occurs in a manner known per se and is of supervised type, as is mentioned in the foregoing. For example, the training may provide for iterating sequences of operations of:
i) updating the values of the parameters of the zone classifier 50 (understood as the weights and the biases of the filters of the convolution stages 56, 56' and of the fully connected layer 61), on the basis of at least part of the spectrograms of the training set, of the relative labels and of the so-called hyperparameters of the zone classifier 50, such as for example the so-called learning rate or the type of activation function;
ii) classifying, on the basis of the updated values of the parameters of the zone classifier 50, the spectrograms of the validation set;
iii) checking the respect, by the classifications of the spectrograms of the validation set, of a predetermined stop condition, of known type; and
iv) in case of lack of respect of the stop condition, changing of the value of at least one hyperparameter and iteration of the previous operations i-iii).

The iteration of the above-mentioned sequences of operations thus ends when the classifications of the validation set respect the stop condition. For example, the stop condition may take place when an error function, indicative of the differences between the classifications of the spectrograms of the validation set and the actual classes goes below a pre-established threshold.

Then, the computer 16 applies (block 304, Figure 9) the zone classifier 50, as obtained following the operations mentioned in block 302 (therefore, with the values of the respective parameters as available at the end of the operations mentioned in block 302) to the spectrograms of the test set, so as to classify them.

Furthermore, the computer 16 calculates (block 306, Figure 9) the confusion matrix of the classifications obtained by means of the operations mentioned in block 304.

The confusion matrix has dimensions NUM_SUBREG x NUM_SUBREG. By way of mere example, Figure 10 shows an example of confusion matrix relative to the case NUM_SUBREG=4, where the classes are indicated by 1, 2, 3, 4 respectively; the elements are indexed as CMᵢⱼ, where 'i' indicates the row and 'j' indicates the column; furthermore, the rows of the confusion matrix represent the so-called ground truth, i.e. the actual classes of the spectrograms, understood as the subregions 2 to which the spectrograms actually refer, whereas the columns represent the classification obtained through the zone classifier 50. In other words, the element CMᵢⱼ represents the number of spectrograms relative to the i-th subregion 2 classified as relative to the j-th subregion 2, therefore it is indicative of a probability of the zone classifier 50 to confuse the i-th subregion 2 with the j-th subregion 2.

On the basis of the confusion matrix, the computer 16 detects (block 308, Figure 9) the possible presence of one or more N-tuples (with N integer greater or equal to two) of classes such that, for each N-tuple, the numbers of spectrograms associated with the classes of the N-tuple that have been classified in a confused manner with respect to one another, i.e. the values of the elements CMᵢⱼ with 'i' and 'j' different from one another and indicative of classes of the N-tuple, respect an aggregation criterion.

For example, the computer 16 may analyse the confusion matrix by rows, initially assuming that the classes do not form any N-tuple. That having been said, considering the i-th class (with 'i' assuming in succession the values 1, 2, 3 and 4), the computer 16 detects if the i-th class already belongs to an N-tuple, in which case it increases the value of 'i' by one, so as to analyse the following row, and thus the following class, otherwise, before increasing the value of 'i', the computer 16 checks if there is one or more m-th classes (with 'm' different from 'i') such that CMᵢₘ > TH (with TH indicating a threshold value), in which case the computer 16 alternatively:
- if none of such m-th classes already belongs to a previously detected N-tuple, associates the i-th class to such m-th classes, so that the i-th class forms, together with such m-th classes, a new N-tuple of classes; or
- if one or more of such m-th classes belong to already previously detected N-tuples, associates the i-th class to one of such already previously detected N-tuples, increasing by one the dimension of such N-tuple; in particular, in case such already previously detected N-tuples are in a number greater than one, the computer 16 may choose with which of such already detected N-tuples to associate the i-th class (for example, it may select the N-tuple with more classes, so as to maximise the dimensions of the N-tuples, or the N-tuple which includes the m-th class so that CMᵢₘ assumes the maximum value).

In any case, the criteria for determining the dimensions of the N-tuples and of the classes forming them may vary with respect to what described. For example, the confusion matrix may be analysed by the computer 16 in a different manner with respect to what described. Furthermore, variations are possible in which the N-tuples of classes are determined assuming that the confusion matrix is in first approximation symmetric, in which case the computer 16 may analyse only a subset of the confusion matrix. Furthermore, variations are possible so that the number N is predefined; for example, if N=2, it is possible, considering a u-th class and a p-th class, for the computer 16 to detect a pair of classes if the element CMᵤₚ and/or the element CMₚᵤ of the confusion matrix exceed the threshold value.

Subsequently, for each N-tuple of classes detected during the operations mentioned in block 308, the computer 16 aggregates (block 310, Figure 9) the classes of the N-tuple; in other words, the computer 16 aggregates the subregions 2 (in a number equal to N) associated with the classes of the N-tuple, so as to form a single region (understood as aggregation of subregions), which is associated (block 312, Figure 9) by the computer 16 with a corresponding label, i.e. a corresponding class. For example, Figure 3 qualitatively shows the aggregation of the classes relative to the SUBREGION A and to the SUBREGION B.

Then, on the basis of the subregions 2 and of the possible aggregations carried out during the operations mentioned in block 310, the computer identifies (block 314, Figure 9) a plurality of zones 9 (shown in Figure 4) of the component 1, which are stored by the computer 16.

In particular, each subregion 2 that has not been aggregated during the operations mentioned in block 310 forms a corresponding zone 9, which is associated with the label of the subregion 2; furthermore, each set of subregions 2 aggregated to one another forms a corresponding zone 9, which is associated with the label of the aggregation of subregions 2.

By way of mere example, Figure 5 highlights a first zone (indicated by 9'), which coincides with a corresponding subregion 2 which has not undergone any aggregation, and a second zone (indicated by 9"), which coincides with the aggregation of a corresponding pair of subregions 2. Still by way of example, Figure 3 shows how the aggregation of the classes relative to the SUBREGION A and to the SUBREGION B leads to the definition of a class relative to a ZONE A, whereas the classes of the SUBREGIONS C and D coincide with the classes of a ZONE C and of a ZONE D respectively.

The aggregation of the classes mentioned in block 310 enables the fully connected layer 61 of the zone classifier 50 to classify on a set of classes equal to the number of zones 9, which in the following is referred to as the number NUM_Z. Practically, the zone classifier 50 is initially configured to classify on a number of classes (which are also referred to as the subregion classes) equal to the number NUM_SUBREG of subregions 2; following the aggregation of the classes mentioned in block 310, the zone classifier 50 is configured to classify on a number of classes (which are also referred to as the zone classes) equal to the number NUM_Z.

For practical purposes, the zones 9 of the component 1 are regions of the component 1, each one of which generates, when mechanically struck in a respective base area 6, an acoustic signal whose spectrogram can be classified by the zone classifier 50 as relative to an acoustic signal generated by striking a portion of the region.

The training of the zone classifier 50 is thus ended.

Again with reference to Figure 4, once ended the operations mentioned in block 108, the computer 16 trains (block 110) the above-mentioned binary classifiers 70, which are in a number equal to NUM_Z; each binary classifier 70 is thus associated with a corresponding zone 9 of the component 1.

As more specifically explained in the following, each binary classifier 70 is trained so as to classify spectrograms generated by striking the corresponding zone 9, so that the classification alternatively indicates if the zone 9 is undamaged or damaged.

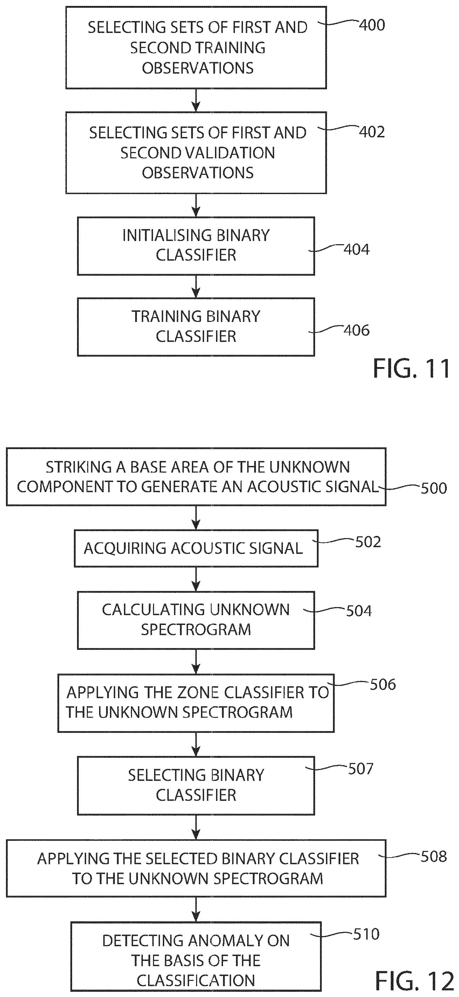

Specifically, considering a generic binary classifier 70, associated with a k-th zone 9 of the component 1, the computer 16 performs the operations shown in Figure 11.

The computer 16 selects (block 400, Figure 11) the spectrograms of the above-mentioned training set relative to the k-th zone 9, which form a set of first training observations, and furthermore selects the spectrograms of the training set relative to zones 9 different from the k-th zone 9, which form a set of second training observations. As specifically explained in the following, the acoustic signals coming from zones 9 different from the k-th zone 9 are considered as generated by damaged versions of the k-th zone 9, so as to obviate the difficulty of finding real damaged versions of the k-th zone 9. Variations are anyway possible in which the set of second training observations also, or exclusively, comprises spectrograms obtained starting from acoustic signals generated by one or more damaged versions of the k-th zone 9, i.e. by components in which the k-th zone is damaged, and/or spectrograms obtained starting from acoustic signals generated by one or more damaged versions of w-th zones 9 (with w different from k), i.e. by components in which the w-th zone is damaged.

Furthermore, the computer 15 selects (block 402, Figure 11) the spectrograms of the above-mentioned validation set relative to the k-th zone 9, which form a set of first validation observations, and furthermore selects the spectrograms of the validation set relative to zones 9 different from the k-th zone 9, which form a set of second validation observations. Variations are anyway possible in which the set of second validation observations also, or exclusively, comprises spectrograms obtained starting from acoustic signals generated by one or more damaged versions of the k-the zone 9 and/or by one or more damaged versions of w-th zones 9 (with w different from k), i.e. by components in which the w-th zone is damaged.

Then, the computer 16 initialises (block 404, Figure 11) the binary classifier 70, which, as is shown in Figure 3, is formed by a convolutional neural network and includes a respective feature extraction stage 72 and at least one fully connected layer 81, which includes two output nodes, associated with the "undamaged zone" class and with the "damaged zone" class respectively.

In particular, the binary classifier 70 is initialised so that the respective feature extraction stage 72 is identical to the feature extraction stage 52 of the zone classifier 50. In other words, the feature extraction stage 72 of the binary classifier 70 has the same structure of the feature extraction stage 52 of the zone classifier 50; furthermore, the initial values of the parameters (i.e. of the weights and of the biases of the filters) of the feature extraction stage 72 of the binary classifier 70 are equal to the values of the corresponding parameters of the feature extraction stage 52 of the zone classifier 50.

The fully connected layer 81 of the binary classifier 70 may be initialised in a manner known per se, irrespective of the fully connected layer 61 of the zone classifier 50.

Practically, the binary classifiers 70 are initialised in an identical manner, irrespective of the zones 9 of the component 1 to which they refer.

Again with reference to Figure 11, after initialising the binary classifier 70, the computer 16 trains (block 406, Figure 11) the binary classifier 70, associating with the first training and validation observations a first class, indicative of the fact that the spectrogram relates to an undamaged version of the zone to which the binary classifier 70 refers, and associating with the second training and validation observations a second class, indicative of the fact that the spectrogram relates to a damaged version of the zone to which the binary classifier 70 refers.

The training enables the feature extraction stage 72 of the binary classifier 70 to differentiate the values of the respective parameters from the values of the parameters of the feature extraction stage 52 of the zone classifier 50.

Practically, the Applicant observed that, by initialising the binary classifiers 70 as is described in the foregoing, it is possible to improve the relative performances, with regard to the actual capability to distinguish between an undamaged zone and a damaged zone. Variations are anyway possible in which the binary classifiers 70 are initialised in a manner known per se, irrespective of the zone classifier 50.

Once the zone classifier 50 and the binary classifiers 70 have been trained, it is possible to use the detection system 10 for detecting the possible presence of anomalies in an unknown component of the same type of the component 1, but of which it is not known a priori if it is undamaged or damaged. To such end, the operations shown in Figure 12 are performed.

Specifically, the striking device 12 is actuated so as to strike (block 500, Figure 12) a base area 6 of the unknown component, which in the following is referred to as the unknown area, so as to generate a corresponding acoustic signal which is acquired (block 502, Figure 12) by the computer 16 through the microphone 14; on the basis of the acquired acoustic signal, the computer 16 calculates (block 504, Figure 12) the corresponding spectrogram, which in the following is referred to as the unknown spectrogram, since the state (undamaged/damaged) of the unknown area is not known a priori; furthermore, in the following reference is made to the unknown zone to refer to the zone 9 of the unknown component to which the unknown area belongs.

Subsequently, the computer 16 applies (block 506, Figure 12) to the unknown spectrogram the zone classifier 50, so as to classify the unknown zone. Practically, the zone classifier 50 allows identifying, between the zones 9 of the component 1, the zone 9 that corresponds to the unknown zone.

Then, the computer 16 selects (block 507, Figure 12), between the binary classifiers 70, the binary classifier 70 relative to the identified zone.

Then, the computer 16 applies (block 508, Figure 12) to the unknown spectrogram the selected binary classifier 70, which alternatively classifies the unknown spectrogram as i) belonging to the respective first class, which indicates that the unknown spectrogram relates to an acoustic signal generated by striking an undamaged version of the identified zone 9, or as belonging to the respective second class, which indicates that the unknown spectrogram relates to an acoustic signal generated by striking a damaged version of the identified zone 9.

In the case when the spectrogram has been classified as belonging to the second class, the computer 16 detects (block 510, Figure 12) the presence of an anomaly, i.e. of a damage/deterioration, in the unknown zone of the unknown component; in such case, in a manner known per se the computer 16 may generate a corresponding signalling.

By iterating the operations shown in Figure 12 in different base areas 6 and in different zones 9 of the unknown component, it is possible to detect the possible presence of anomalies in each zone 9 of the unknown component.

In particular, in the case when all the spectrograms relative to a zone 9 of the unknown component have been classified as belonging to the respective first class, the zone 9 is undamaged; alternatively, if one or more of the spectrograms relative to the zone 9 of the unknown component have been classified as belonging to the respective second class, the zone is damaged.

In the case when, given a zone 9, spectrograms relative only to a subset of the base areas 6 of the zone 9 are classified, the precision of the detection can decrease.

The advantages that the present solution allows obtaining clearly emerge from the preceding description.

In particular, the present method allows automating the detection of anomalies of aircraft mechanical components, as well as localising possible anomalies at the level of single zones of the mechanical components. Still, the present method allows excluding the presence of a trained operator.

Finally, it is clear that modifications and variations can be made to the method and to the system for detecting anomalies as described and illustrated herein, without thereby departing from the scope of protection of the present invention, as defined in the appended claims.

For example, the zone classifier and/or the binary classifiers can be formed by classifiers of different type with respect to what described.

Furthermore, although in the preceding description it was assumed, for sake of simplicity, that the grid 8 of base areas 6, and thus the definition of the shape and of the arrangement of the areas which are hit by the striking device 12, is the same for the component 1, the training components and the unknown component, it is possible for the grid of base areas of one or more of the training components, as well of the unknown component, to differ from the grid 8 of base areas 6 of the component 1. In other words, for the purposes of the present method, it is not necessary, given a zone 9 of the component 1, for the corresponding zone of the unknown component and/or the corresponding zones of one or more of the training components to be struck in the same points, although this may entail an improvement of the performances.

Furthermore, in the case when the detection system 10 is configured so that the operations mentioned in block 500 are carried out on an unknown area of which the zone of belonging is known a priori, it is possible to omit the operations mentioned in block 506. In such case, the unknown spectrogram is not classified by the zone classifier 50, but is classified only by the binary classifier 70 relative to the zone to which the unknown area belongs, which is selected by the computer 16 depending on the zone of belonging.

With regard to the binary classifiers 70, as is mentioned in the foregoing, they may be trained without being previously initialised on the basis of the zone classifier 50.

Additionally, the detection and aggregation operations of the N-tuple of classes mentioned in blocks 308, 310 are optional. In other words, it is possible for each zone 9 to coincide with a corresponding subregion 2, in such case the zone classifier 50 is configured to classify on a number of classes equal to NUM_SUBREG, and furthermore the number of binary classifiers 70 is equal to NUM_SUBREG. This entails an increase in the number of binary classifiers 70 and therefore an increase in the computational burden required for training them.

Additionally, before calculating the spectrograms, the computer 16 may perform so-called denoising operations, i.e. noise filtering operations, of the sampled electric signals deriving from the transduction of the acoustic signals, in which case the spectrograms are calculated on the basis of the sampled electric signals available after the filtering of the noise.

Similarly, it is possible for the computer 16 to perform standardisation operations of the spectrograms and for the operations described in the foregoing to be performed starting from the standardised spectrograms. To such end, the computer 16 may calculate the mean and the standard deviation of the elements of the spectrograms relative to the training components, and subsequently may subtract the mean from each one of such spectrograms, besides from the unknown spectrograms; furthermore, the computer 16 may divide the elements of the spectrograms relative to the training components and the unknown spectrograms for the standard deviation. Other types of standardisation or normalisation are anyway possible.

Finally, the present method and the present system for detecting anomalies can also be applied to mechanical components different from the aircraft mechanical components; for example, they can be applied for structurally monitoring a wind blade or a civil infrastructure, and more generally for monitoring the health status of any whatsoever mechanical piece.

## Claims

1. A method implemented by a computer (16) for detecting anomalies of an unknown component, comprising determining (314) a plurality of zones (9) of the unknown component and carrying out at least once the steps of:
- generating (500, 502, 504) a spectrogram relative to an acoustic signal generated by striking a portion (6) of a zone (9) of the unknown component;
- among a plurality of binary classifiers (70) each one relative to a corresponding zone (9) of the unknown component, selecting (507) the binary classifier (70) relative to the struck zone, each one of said binary classifiers (70) being configured to classify spectrograms relative to acoustic signals generated by striking the corresponding zone on two respective classes indicative of a spectrogram relative to an acoustic signal generated by striking an undamaged version or a damaged version of the corresponding zone (9) respectively;
- through the selected binary classifier, performing (508) a classification of said spectrogram in one of the respective two classes; and
- detecting (510) the presence of an anomaly in said struck zone of the unknown component, on the basis of the classification performed by the selected binary classifier.

2. The method according to claim 1, wherein each binary classifier (70) has been trained in a supervised manner on the basis of:
- respective first training spectrograms, relative to acoustic signals generated by striking portions (6) of the corresponding zones (9) of training components identical to the unknown component and without any damage, said first training spectrograms being associated with the corresponding first class; and
- respective second training spectrograms, relative to acoustic signals generated by striking portions (6) of the corresponding zones (9) of training components identical to the unknown component and with damages in said corresponding zones and/or by striking portions (6) of zones (9) different from the corresponding zone (9) of training components identical to the unknown component and without any damage and/or by striking portions (6) of zones (9) different from the corresponding zone (9) of training components identical to the unknown component and with damages in said zones (9) different from the corresponding zone (9), said second training spectrograms being associated with the corresponding second class.

3. The method according to any one of the preceding claims, wherein selecting (507) the binary classifier (70) relative to the struck zone comprises:
- classifying (506), by means of a multiclass classifier (50), the spectrogram in a corresponding class among a plurality of zone classes equal to the number of zones (9) of the unknown component, each one of said zone classes being indicative of a spectrogram relative to an acoustic signal generated by striking a corresponding zone; and
- selecting (507) the binary classifier (70) on the basis of the classification performed by the multiclass classifier (50).

4. The method according to claim 3, wherein the multiclass classifier (50) has been trained by performing the steps of:
- determining (100) a plurality of subregions (2) of the unknown component; and subsequently
- training (108) the multiclass classifier (50) on the basis of a set of training spectrograms relative to acoustic signals generated by striking portions (6) of the subregions (2) of training components identical to the unknown component and without any damage, each training spectrogram of said set being associated with a corresponding subregion class (2) indicative of the subregion (2) to which the training spectrogram refers, so that the multiclass classifier (50) is configured to perform classifications on a number of subregion classes equal to the number of subregions (2), each one of said subregion classes being indicative of a spectrogram relative to an acoustic signal generated by striking the corresponding subregion (2); and subsequently
- defining (308,310,312,314) the zone classes so that each zone class is identical to a corresponding subregion class or is indicative of a corresponding set of subregion classes, and subsequently configuring the zone classifier (50) so that it performs classifications on said plurality of zone classes.

5. The method according to claim 4, wherein said step of defining (308,310,312,314) the zone classes comprises:
- classifying (304) through the zone classifier (50) a plurality of test spectrograms relative to acoustic signals generated by striking portions (6) of the subregions (2) of training components identical to the unknown component and without any damage, so that each test spectrogram is classified in a corresponding subregion class;
- calculating (306) a confusion matrix of the classifications of the test spectrograms; and
- on the basis of the confusion matrix, detecting (308) the presence of sets of two or more subregions (2) such that the test spectrograms relative to said two or more subregions (2) have been classified in a confused manner between one another in a manner that respects a threshold condition; and
- for each detected set of subregions (2), aggregating (310) the corresponding subregion classes so as to form a corresponding zone class; and
- for each subregion (2) which does not belong to any detected set of subregions (2), setting (314) a corresponding zone class equal to the subregion class.

6. The method according to claim 4 or 5, wherein, in the respective training, each binary classifier (70) has been initialized on the basis of the zone classifier (50).

7. The method according to claim 6, wherein the zone classifier (50) and the binary classifiers (70) are convolutional neural networks, each one of which comprises a respective feature extraction stage (52,72); and wherein the binary classifiers (70) have been initialized so that the respective feature extraction stages (72) are identical to the feature extraction stage (52) of the zone classifier (50).

8. A method for detecting anomalies comprising the steps of:
- performing the method implemented by a computer (16) according to any one of the preceding claims;
- performing (500) said strike of a portion (6) of a zone (9) of the unknown component;
and wherein generating (502,504) a spectrogram depending on the acoustic signal comprises:
- acquiring (502) the acoustic signal; and
- calculating (504) the spectrogram on the basis of the acquired acoustic signal.

9. The method for detecting anomalies according to claim 8, wherein said strike is performed periodically.

10. A processing system comprising means (16) configured to perform the method according to any one of the claims from 1 to 7.

11. A system comprising:
- the processing system (16) according to claim 10;
- a striking device (12) configured to mechanically strike single portions (6) of zones (9) of the unknown component, so as to generate corresponding acoustic signals; and
- a microphone (14), coupled to the processing system (16) and configured to acquire the acoustic signals.

12. A computer program comprising instructions that, when the program is performed by a computer (16), cause the computer (16) to perform the method according to any one of the claims from 1 to 7.

13. A computer medium readable by a computer (16), on which the computer program is stored according to claim 12.

## Patentansprüche

1. Verfahren, das durch einen Computer (16) implementiert wird, um Anomalien einer unbekannten Komponente zu detektieren, wobei das Verfahren das Bestimmen (314) mehrerer Zonen (9) der unbekannten Komponente und das wenigstens einmalige Ausführen der folgenden Schritte umfasst:
- Erzeugen (500, 502, 504) eines Spektrogramms in Bezug auf ein akustisches Signal, das durch Klopfen auf einen Abschnitt (6) einer Zone (9) der unbekannten Komponente erzeugt wird;
- Auswählen (507) des binären Klassifikators (70) in Bezug auf die getroffene Zone unter mehreren binären Klassifikatoren (70), jeder in Bezug auf eine entsprechende Zone (9) der unbekannten Komponente, wobei jeder der binären Klassifikatoren (70) konfiguriert ist, Spektrogramme in Bezug auf akustische Signale, die durch Klopfen auf die entsprechende Zone erzeugt werden, in zwei jeweilige Klassen, die ein Spektrogramm in Bezug auf das akustisches Signal, das durch Klopfen auf eine unbeschädigte Version bzw. auf eine beschädigte Version der entsprechenden Zone (9) erzeugt wird, angeben, zu klassifizieren;
- Ausführen (508) einer Klassifikation des Spektrogramms in eine der jeweiligen zwei Klassen durch den ausgewählten binären Klassifikator; und
- Detektieren (510) der Anwesenheit einer Anomalie in der getroffenen Zone der unbekannten Komponente auf der Grundlage der durch den ausgewählten binären Klassifikator ausgeführten Klassifikation.

2. Verfahren nach Anspruch 1, wobei jeder binäre Klassifikator (70) auf überwachte Weise trainiert worden ist auf der Grundlage:
- jeweiliger erster Trainingsspektrogramme in Bezug auf akustische Signale, die durch Klopfen auf Abschnitte (6) der entsprechenden Zonen (9) von Trainingskomponenten, die gleich der unbekannten Komponente und ohne irgendeine Beschädigung sind, erzeugt werden, wobei die ersten Trainingsspektrogramme der entsprechenden ersten Klasse zugeordnet sind; und
- jeweiliger zweiter Trainingsspektrogramme in Bezug auf akustische Signale, die durch Klopfen auf Abschnitte (6) der entsprechenden Zonen (9) von Trainingskomponenten, die gleich der unbekannten Komponente und mit Beschädigungen in den entsprechenden Zonen sind, und/oder durch Klopfen auf Abschnitte (6) von Zonen (9), die von der entsprechenden Zone (9) von Trainingskomponenten, die gleich der unbekannten Komponente und ohne Beschädigung sind, verschieden sind, und/oder durch Klopfen auf Abschnitte (6) von Zonen (9), die von der entsprechenden Zone (9) von Trainingskomponenten, die gleich der unbekannten Komponente und mit Beschädigungen in den Zonen (9), die von der entsprechenden Zone (9) verschieden sind, sind, verschieden sind, erzeugt werden, wobei die zweiten Trainingsspektrogramme der entsprechenden zweiten Klasse zugeordnet sind.

3. Verfahren nach einem der vorhergehenden Ansprüche, wobei das Auswählen (507) des binären Klassifikators (70) in Bezug auf die getroffene Zone umfasst:
- Klassifizieren (506) des Spektrogramms in eine entsprechende Klasse unter den mehreren Zonenklassen gleich der Anzahl der Zonen (9) der unbekannten Komponente mittels eines Mehrklassenklassifikators (50), wobei jede der Zonenklassen ein Spektrogramm in Bezug auf ein durch Klopfen auf eine entsprechende Zone erzeugtes akustisches Signal angibt; und
- Auswählen (507) des binären Klassifikators (70) auf der Grundlage der durch den Mehrklassenklassifikator (50) ausgeführten Klassifizierung.

4. Verfahren nach Anspruch 3, wobei der Mehrklassenklassifikator (50) durch Ausführen der folgenden Schritte trainiert worden ist:
- Bestimmen (100) mehrerer Teilgebiete (2) der unbekannten Komponente; und nachfolgend
- Trainieren (108) des Mehrklassenklassifikators (50) auf der Grundlage einer Menge von Trainingsspektrogrammen in Bezug auf akustische Signale, die durch Klopfen auf Abschnitte (6) der Teilgebiete (2) von Trainingskomponenten, die gleich der unbekannten Komponente und ohne irgendeine Beschädigung sind, erzeugt werden, wobei jedes Trainingsspektrogramm der Menge einer entsprechenden Teilgebietsklasse (2), die das Teilgebiet (2) angibt, auf das sich das Trainingsspektrogramm bezieht, zugeordnet ist, sodass der Mehrklassenklassifikator (50) konfiguriert ist, Klassifizierungen an einer Anzahl von Teilgebietsklassen gleich der Anzahl von Teilgebieten (2) auszuführen, wobei jede der Teilgebietsklassen ein Spektrogramm in Bezug auf ein akustisches Signal, das durch Klopfen auf das entsprechende Teilgebiet (2) erzeugt wird, angibt; und nachfolgend
- Definieren (308, 310, 312, 314) der Zonenklassen in der Weise, dass jede Zonenklasse gleich einer entsprechenden Teilgebietsklasse ist oder eine entsprechende Menge von Teilgebietsklassen angibt, und nachfolgendes Konfigurieren des Zonenklassifikators (50) in der Weise, dass er an den mehreren Zonenklassen Klassifizierungen ausführt.

5. Verfahren nach Anspruch 4, wobei der Schritt des Definierens (308, 310, 312, 314) der Zonenklassen umfasst:
- Klassifizieren (304) mehrerer Testspektrogramme in Bezug auf akustische Signale, die durch Klopfen auf Abschnitte (6) der Teilgebiete (2) von Trainingskomponenten, die gleich der unbekannten Komponente und ohne irgendeine Beschädigung sind, erzeugt werden, sodass jedes Testspektrogramm in eine entsprechende Teilgebietsklasse klassifiziert wird, durch den Zonenklassifikator (50);
- Berechnen (306) einer Verwirrungsmatrix der Klassifizierungen der Testspektrogramme; und
- Detektieren (308) der Anwesenheit von Mengen zweier oder mehrerer Teilgebiete (2) in der Weise, dass die Testspektrogramme in Bezug auf die zwei oder mehr Teilgebiete (2) in einer Art, die eine Schwellenbedingung erfüllt, auf verwirrte Weise zwischen einander klassifiziert worden sind, auf der Grundlage der Verwirrungsmatrix; und
- Aggregieren (310) der entsprechenden Teilgebietsklassen in der Weise, dass sie eine entsprechende Zonenklasse bilden, für jede detektierte Menge von Teilgebieten (2); und
- Einstellen (314) einer entsprechenden Zonenklasse gleich der Teilgebietsklasse für jedes Teilgebiet (2), das nicht zu irgendeiner detektierten Menge von Teilgebieten (2) gehört.

6. Verfahren nach Anspruch 4 oder 5, wobei in dem jeweiligen Training jeder binäre Klassifikator (70) auf der Grundlage des Zonenklassifikators (50) initialisiert worden ist.

7. Verfahren nach Anspruch 6, wobei der Zonenklassifikator (50) und die binären Klassifikatoren (70) neuronale Faltungsnetze sind, wovon jedes eine jeweilige Merkmalsextraktionsphase (52, 72) umfasst; und wobei die binären Klassifikatoren (70) in der Weise initialisiert worden sind, dass die jeweiligen Merkmalsextraktionsphasen (72) gleich der Merkmalsextraktionsphase (52) des Zonenklassifikators (50) sind.

8. Verfahren zum Detektieren von Anomalien, wobei das Verfahren die folgenden Schritte umfasst:
- Ausführen des Verfahrens, das durch einen Computer (16) implementiert wird, nach einem der vorhergehenden Ansprüche; und
- Ausführen (500) des Klopfens auf einen Abschnitt (6) einer Zone (9) der unbekannten Komponente;
wobei das Erzeugen (502, 504) eines Spektrogramms in Abhängigkeit von dem akustischen Signal umfasst:
- Erfassen (502) des akustischen Signals; und
- Berechnen (504) des Spektrogramms auf der Grundlage des erfassten akustischen Signals.

9. Verfahren zum Detektieren von Anomalien nach Anspruch 8, wobei das Klopfen periodisch ausgeführt wird.

10. Verarbeitungssystem, das Mittel (16) umfasst, die konfiguriert sind, das Verfahren nach einem der Ansprüche 1 bis 7 auszuführen.

11. System, das umfasst:
- das Verarbeitungssystem (16) nach Anspruch 10;
- eine Klopfvorrichtung (12), die zum mechanischen Klopfen auf einzelne Abschnitte (6) von Zonen (9) der unbekannten Komponente, um entsprechende akustische Signale zu erzeugen, konfiguriert ist;
- ein Mikrofon (14), das mit dem Verarbeitungssystem (16) gekoppelt ist und zum Erfassen der akustischen Signale konfiguriert ist.

12. Computerprogramm, das Anweisungen umfasst, die veranlassen, dass der Computer (16) das Verfahren nach einem der Ansprüche 1 bis 7 ausführt, wenn das Programm durch einen Computer (16) ausgeführt wird.

13. Computermedium, das durch einen Computer (16) lesbar ist, wobei in dem Computermedium das Computerprogramm nach Anspruch 12 gespeichert ist.

## Revendications

1. Procédé exécuté par un ordinateur (16) pour détecter des anomalies d'un composant inconnu, comprenant la détermination (314) d'une pluralité de zones (9) du composant inconnu et l'exécution au moins une fois des étapes suivantes :
- génération (500, 502, 504) d'un spectrogramme relatif à un signal acoustique généré par la frappe d'une portion (6) d'une zone (9) du composant inconnu ;
- parmi une pluralité de classifieurs binaires (70) relatifs chacun à une zone correspondante (9) du composant inconnu, sélection (507) du classifieur binaire (70) relatif à la zone frappée, chacun desdits classifieurs binaires (70) étant configuré pour classer des spectrogrammes relatifs à des signaux acoustiques générés par la frappe de la zone correspondante sur deux classes respectives indicatives d'un spectrogramme relatif à un signal acoustique généré par la frappe d'une version non endommagée ou d'une version endommagée de la zone correspondante (9) respectivement ;
- par l'intermédiaire du classifieur binaire sélectionné, exécution (508) d'une classification dudit spectrogramme dans l'une des deux classes respectives ; et
- détection (510) de la présence d'une anomalie dans ladite zone frappée du composant inconnu, sur la base de la classification exécutée par le classifieur binaire sélectionné.

2. Procédé selon la revendication 1, dans lequel chaque classifieur binaire (70) a été entraîné d'une manière supervisée sur la base de :
- premiers spectrogrammes d'apprentissage respectifs, relatifs à des signaux acoustiques générés par frappe de portions (6) des zones correspondantes (9) de composants d'apprentissage identiques au composant inconnu et sans aucun dommage, lesdits premiers spectrogrammes d'apprentissage étant associés à la première classe correspondante ; et
- deuxièmes spectrogrammes d'apprentissage respectifs, relatifs à des signaux acoustiques générés par frappe de portions (6) des zones correspondantes (9) de composants d'apprentissage identiques au composant inconnu et avec des dommages dans lesdites zones correspondantes et/ou par frappe de portions (6) de zones (9) différentes de la zone correspondante (9) de composants d'apprentissage identiques au composant inconnu et sans aucun dommage et/ou par frappe de portions (6) de zones (9) différentes de la zone correspondante (9) de composants d'apprentissage identiques au composant inconnu et avec des dommages dans lesdites zones (9) différentes de la zone correspondante (9), lesdits deuxièmes spectrogrammes d'apprentissage étant associés à la deuxième classe correspondante.

3. Procédé selon l'une quelconque des revendications précédentes, dans lequel la sélection (507) du classifieur binaire (70) relatif à la zone frappée comprend :
- la classification (506), au moyen d'un classifieur à classes multiples (50), du spectrogramme dans une classe correspondante parmi une pluralité de classes de zones égale au nombre de zones (9) du composant inconnu, chacune desdites classes de zones étant indicative d'un spectrogramme relatif à un signal acoustique généré par frappe d'une zone correspondante ; et
- la sélection (507) du classifieur binaire (70) sur la base de la classification exécutée par le classifieur à classes multiples (50).

4. Procédé selon la revendication 3, dans lequel le classifieur à classes multiples (50) a été entraîné par exécution des étapes de :
- détermination (100) d'une pluralité de sous-régions (2) du composant inconnu ; et ensuite
- apprentissage (108) du classifieur à classes multiples (50) sur la base d'un jeu de spectrogrammes d'apprentissage relatifs à des signaux acoustiques générés par frappe de portions (6) des sous-régions (2) de composants d'apprentissage identiques au composant inconnu et sans aucun dommage, chaque spectrogramme d'apprentissage dudit jeu étant associé à une classe de sous-régions correspondante (2) indicative de la sous-région (2) à laquelle se réfère le spectrogramme d'apprentissage, de façon que le classifieur à classes multiples (50) soit configuré pour exécuter des classifications sur un nombre de classes de sous-régions égal au nombre de sous-régions (2), chacune desdites classes de sous-régions étant indicative d'un spectrogramme relatif à un signal acoustique généré par frappe de la sous-région correspondante (2) ; et ensuite
- définition (308, 310, 312, 314) des classes de zones de façon que chaque classe de zones soit identique à une classe de sous-régions correspondante ou soit indicative d'un jeu correspondant de classes de sous-régions, et ensuite configuration du classifieur de zones (50) de façon qu'il exécute des classifications sur ladite pluralité de classes de zones.

5. Procédé selon la revendication 4, dans lequel ladite étape de définition (308, 310, 312, 314) des classes de zones comprend :
- la classification (304) par l'intermédiaire du classifieur de zones (50) d'une pluralité de spectrogrammes de test relatifs à des signaux acoustiques générés par frappe de portions (6) des sous-régions (2) de composants d'apprentissage identiques au composant inconnu et sans aucun dommage, de façon que chaque spectrogramme de test soit classé dans une classe de sous-régions correspondante ;
- le calcul (306) d'une matrice de confusion des classifications des spectrogrammes de test ; et
- sur la base de la matrice de confusion, la détection (308) de la présence de jeux de deux ou plus de deux sous-régions (2) de façon que les spectrogrammes de test relatifs auxdites deux ou plus de deux sous-régions (2) aient été classés d'une manière confuse entre elles d'une manière qui respecte une condition de seuil ; et
- pour chaque jeu détecté de sous-régions (2), l'agrégation (310) des classes de sous-régions correspondantes de façon à former une classe de zones correspondante ; et
- pour chaque sous-région (2) qui n'appartient à aucun jeu détecté de sous-régions (2), l'établissement (314) d'une classe de zones correspondante égale à la classe de sous-régions.

6. Procédé selon la revendication 4 ou 5, dans lequel, dans l'apprentissage respectif, chaque classifieur binaire (70) a été initialisé sur la base du classifieur de zones (50).

7. Procédé selon la revendication 6, dans lequel le classifieur de zones (50) et les classifieurs binaires (70) sont des réseaux neuronaux convolutifs, parmi lesquels chacun comprend un étage d'extraction de caractéristique respectif (52, 72) ; et dans lequel les classifieurs binaires (70) ont été initialisés de façon que les étages d'extraction de caractéristique respectifs (72) soient identiques à l'étage d'extraction de caractéristique (52) du classifieur de zones (50).

8. Procédé pour détecter des anomalies, comprenant les étapes de :
- exécution du procédé exécuté par un ordinateur (16) selon l'une quelconque des revendications précédentes ;
- exécution (500) de ladite frappe d'une portion (6) d'une zone (9) du composant inconnu ;
et dans lequel la génération (502, 504) d'un spectrogramme dépendant du signal acoustique comprend :
- l'acquisition (502) du signal acoustique ; et
- le calcul (504) du spectrogramme sur la base du signal acoustique acquis.

9. Procédé pour détecter des anomalies selon la revendication 8, dans lequel ladite frappe est exécutée périodiquement.

10. Système de traitement comprenant des moyens (16) configurés pour exécuter le procédé selon l'une quelconque des revendications 1 à 7.

11. Système comprenant :
- le système de traitement (16) selon la revendication 10 ;
- un dispositif de frappe (12) configuré pour frapper mécaniquement des portions isolées (6) de zones (9) du composant inconnu, de façon à générer des signaux acoustiques correspondants ; et
- un microphone (14), couplé au système de traitement (16) et configuré pour acquérir les signaux acoustiques.

12. Programme informatique comprenant des instructions qui, lorsque le programme est exécuté par un ordinateur (16), amènent l'ordinateur (16) à exécuter le procédé selon l'une quelconque des revendications 1 à 7.

13. Support informatique lisible par un ordinateur (16), sur lequel le programme informatique selon la revendication 12 est stocké.
